# EUROPEAN PATENT APPLICATION

(11) **EP 4 389 245 A1**
(43) Date of publication of application: **26.06.2024**
(21) Application number: 22858435.5
(22) Date of filing: 12.08.2022
(51) Int. Cl.: A63C 5/00, A63C 5/12, B82Y 30/00, B24B 37/00

(54) **SLIDING APPARATUS AND METHOD FOR MANUFACTURING SAME**

(30) Priority: 18.08.2021 JP 2021133559
(71) Applicant: Fujimi Incorporated, Kiyosu-shi, Aichi 452-8502 (JP)
(72) Inventor: MOROE, Yasuhiro, Kiyosu-shi, Aichi 452-8502 (JP); MORINAGA, Hitoshi, Kiyosu-shi, Aichi 452-8502 (JP); HOTTA, Kazutoshi, Kiyosu-shi, Aichi 452-8502 (JP); MIYAMOTO, Naoto, Sendai-shi, Miyagi 982-0801 (JP); TAKEDA, Masaki, Kyotanabe-shi, Kyoto 610-0394 (JP)
(74) Representative: Grünecker Patent- und Rechtsanwälte PartG mbB
(86) International application number: PCT/JP2022/030811
(87) International publication number: WO 2023/022114

(57) **Abstract**

There is provided a sliding apparatus having low frictional resistance with a snow surface or an ice surface and excellent sliding properties. A sliding apparatus for sliding on a sliding object (snow surface or ice surface) has a sliding surface (1) contacting the sliding object. The sliding surface (1) is divided into a plurality of regions (1A, 1B, 1C) different in the surface arithmetic mean roughness Ra, and the plurality of regions (1A, 1B, 1C) is arranged in order along the longitudinal direction. Among the plurality of regions (1A, 1B, 1C), the surface arithmetic mean roughness Ra of a front region (1A) which is a region first contacting the sliding object in sliding is smaller than the surface arithmetic mean roughness Ra of the rear region (1B) positioned rearward in the sliding direction with respect to the front region (1A).

## Description

### Technical Field

The present invention relates to a sliding apparatus and a method for manufacturing the same.

### Background Art

A sliding apparatus for sliding on snow or ice (e.g., snow skis for sliding on snow, ice skate boots for sliding on ice) has smoothed and lubricated sliding surfaces to lower the frictional resistance with a snow surface or an ice surface and improve the sliding properties. For example, the snow skis have sliding surfaces smoothed and lubricated by a wax coating formed by polishing with fixed abrasives and wax application.

However, conventional snow skis have had smoothed and lubricated sliding surfaces, but have had room for a further improvement of sliding properties.

### Citation List

### Patent Literatures

PTL 1: JP 7-194760 A
PTL 2: JP 2003-299762 A

### Summary of Invention

### Technical Problem

Thus, it is an object of the present invention to solve the problem of the prior arts as described above and to provide a sliding apparatus having low frictional resistance with the snow surface or the ice surface and excellent sliding properties and a method for manufacturing the same.

### Solution to Problem

To solve the above-described problem, a sliding apparatus according to one aspect of the present invention is a sliding apparatus for sliding on a sliding object, the sliding object being a snow surface or an ice surface, and includes: a sliding surface contacting the sliding object, the sliding surface being divided into a plurality of regions different in the surface arithmetic mean roughness Ra and the plurality of regions being arranged in order along the longitudinal direction, in which the surface arithmetic mean roughness Ra of a front region which is a region first contacting the sliding object in sliding among the plurality of regions is smaller than the surface arithmetic mean roughness Ra of a rear region positioned rearward with respect to the front region.

A method for manufacturing a sliding apparatus according to another aspect of the present invention is a method for manufacturing the sliding apparatus according to the one aspect described above, and includes: polishing the front region using a slurry polishing composition containing abrasives.

### Advantageous Effects of Invention

The sliding apparatus according to the present invention has low frictional resistance with the snow surface or the ice surface and excellent sliding properties. The method for manufacturing a sliding apparatus of the present invention can manufacture a sliding apparatus having low frictional resistance with the snow surface or the ice surface and excellent sliding properties.

### Brief Description of Drawings

FIG. 1 is a bottom view of a snow ski which is one embodiment of a sliding apparatus according to the present invention;
FIG. 2 is a cross-sectional view of the snow ski in FIG. 1 cut by a plane orthogonal to the longitudinal direction;
FIG. 3 is a view illustrating one example of an aspect of a plurality of regions formed on the sliding surface;
FIG. 4 is a view illustrating another example of an aspect of a plurality of regions formed on the sliding surface;
FIG. 5 is a view illustrating a still another example of an aspect of a plurality of regions formed on the sliding surface;
FIG. 6 is a graph showing changes in the dynamic friction coefficients with sliding;
FIG. 7 is a graph showing the dynamic friction coefficients when the snow skis slide on a snow surface; and
FIG. 8 is a graph showing the dynamic friction coefficients when the snow skis slide on a snow surface.

### Description of Embodiments

One embodiment of the present invention will now be described in detail. The embodiment described below illustrates one example of the present invention, and the present invention is not limited to this embodiment. The embodiment described below can be variously modified or improved, and such modified or improved aspects may also be included in the present invention.

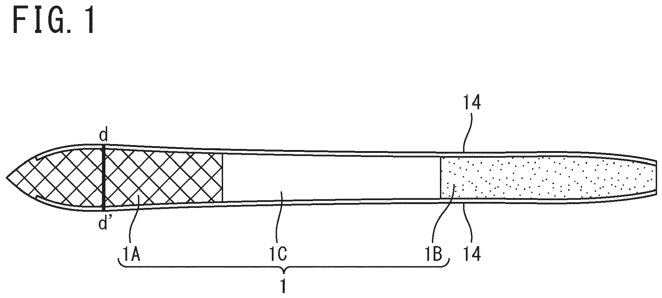

One embodiment of a sliding apparatus according to the present invention is described with a snow ski as an example. However, the snow ski is one example of the sliding apparatus according to the present invention, and the sliding apparatus according to the present invention is not limited to the snow ski. The shape of a sliding surface 1 of the snow ski according to this embodiment is an elongated rectangular shape (strip shape) as is understood from FIG. 1, but the shape of the sliding surface 1 is not particularly limited and other shapes are acceptable. Examples of the shape of the sliding surface 1 include a circular shape, an oval shape, a triangular shape, a square shape, a pentagonal shape, a hexagonal shape, a linear shape, and the like, for example.

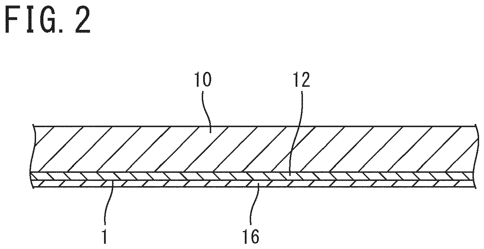

The snow ski which is one embodiment of the sliding apparatus according to the present invention is a sliding apparatus for sliding on snow. The snow ski according to this embodiment includes an elongated and substantially plate-like core material 10, a sole 12 arranged on the bottom surface side of the core material 10, and edges 14 arranged on both side portions in the width direction of the sole 12 as illustrated in FIGS. 1, 2. The core material 10 is constituted of a wood material or a fiber-reinforced resin, for example. The sole 12 is constituted of resin, such as polyethylene (e.g., high molecular weight high-density polyethylene, ultra-high molecular weight polyethylene), polypropylene, polybutene, polyacetal, polymethacrylate, or polytetrafluoroethylene. The edges 14 are constituted of metal, for example.

The exposed surface of the sole 12 constitutes the bottom surface of the snow ski, and the bottom surface forms the sliding surface 1 contacting the snow surface in sliding. The sliding surface 1 is divided into a plurality (three in the example in FIG. 1) of regions 1A, 1B, 1C different in the surface arithmetic mean roughness Ra (hereinafter also sometimes simply referred to as "surface roughness Ra"), and the plurality of regions 1A, 1B, 1C is arranged along the longitudinal direction (hereinafter also sometimes referred to as "sliding direction") of the sliding surface 1. The surface roughness Ra was measured in parts other than grooves observed in structures or scales. The regions different in the surface roughness Ra refer to regions in which the ranges of an average value ± 1σ (standard deviation) do not overlap when the surface roughness Ra in the regions is measured by a method described below.

The front region 1A positioned forward with respect to the center in the sliding direction (i.e., travel direction side) among the plurality of regions 1A, 1B, 1C contains a part d-d' first contacting the snow surface, which is a sliding object, in sliding. The surface roughness Ra of the front region 1A is smaller than the surface roughness Ra of a region contacting the sliding object on the rearmost side in the sliding direction. Herein, the region contacting the sliding object on the rearmost side in the sliding direction is contained in the rear region 1B positioned rearward in the sliding direction (i.e., opposite side in the travel direction) with respect to the front region 1A.

More specifically, in the snow ski according to this embodiment, the region first contacting the snow surface, which is the sliding object, in sliding is made smoother than the region contacting the snow surface, which is the sliding object, on the rearmost side in the sliding direction. Hereinafter, the region 1C positioned between the front region 1A and the rear region 1B is also sometimes referred to as an "intermediate region".

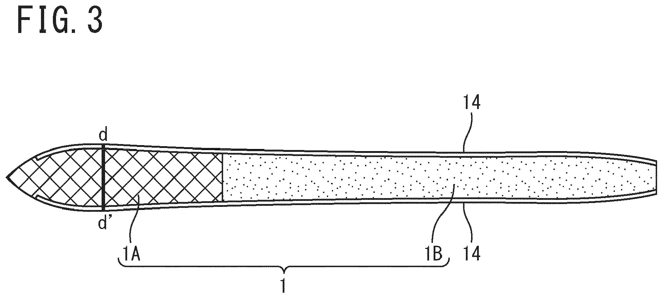

In the snow ski according to this embodiment, the sliding surface 1 may be constituted by two regions of the front region 1A and the rear region 1B (see FIG. 3).

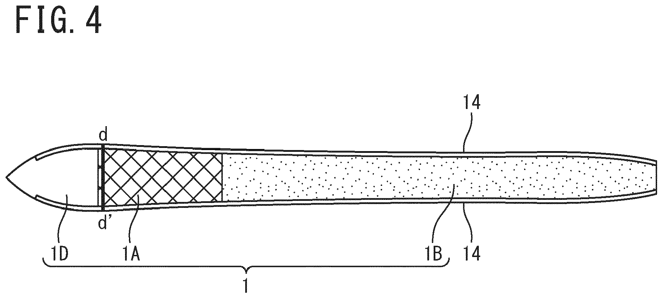

Further, in the snow ski according to this embodiment, a region positioned further forward with respect to the part d-d' first contacting the snow surface in sliding may be a region 1D (different from that of the front region 1A) having a surface roughness Ra different from that of the front region 1A (see FIG. 4). Herein, polishing is applied to a region positioned rearward by 1 mm or more in the sliding direction with respect to the part d-d' first contacting the snow surface in sliding to reduce the surface roughness Ra. However, the region 1D positioned forward in the sliding direction with respect to the part d-d' first contacting the snow surface in sliding may or may not be polished to have the surface roughness Ra different from that in the region positioned rearward by 1 mm or more in the sliding direction with respect to the part d-d' first contacting the snow surface in sliding.

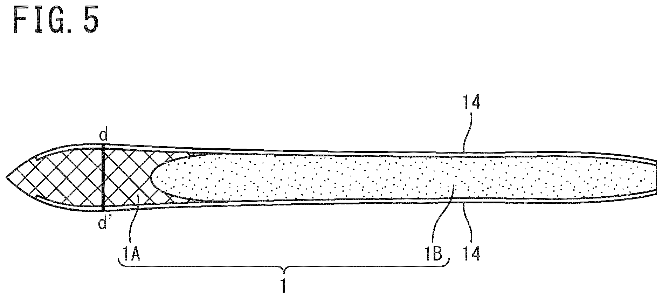

Further, in the snow ski according to this embodiment, the boundary between the front region 1A (polished region) and the rear region 1B or the intermediate region 1C (e.g., unpolished region) may be a straight line orthogonal to the sliding direction or a curve. For example, a semi-oval curve as illustrated in FIG. 5 may be acceptable.

The sliding surface 1 may be divided into four or more regions different in the surface roughness Ra. In this case, two or more of the intermediate regions 1C may be arranged between the front region 1A and the rear region 1B.

The surface roughness Ra of the intermediate region 1C is not particularly limited and may be larger than the surface roughness Ra of the front region 1A and smaller than the surface roughness Ra of the rear region 1B or may be the same as the surface roughness Ra of the rear region 1B. When the plurality of intermediate regions 1C is arranged between the front region 1A and the rear region 1B, the intermediate regions 1C may all have the same surface roughness Ra, some of the intermediate regions 1C may have the same surface roughness Ra and the other intermediate regions 1C may have a different surface roughness Ra, or the intermediate regions 1C may all have a different surface roughness Ra. For example, between the front region 1A and the rear region 1B, the intermediate region 1C having a surface roughness of 0.30 um or less and the intermediate region 1C having a surface roughness of 0.4 um or more may be alternately arranged in a stripe shape.

The sliding surface of a conventional snow ski is not divided into the plurality of regions different in the surface roughness Ra, and the entire sliding surface forms one region. However, the sliding surface 1 of the snow ski according to this embodiment is divided into the plurality of regions different in the surface roughness Ra as described above. This is considered to noticeably lower the frictional resistance between the sliding surface 1 and the snow surface in sliding, and therefore, the snow ski according to this embodiment has extremely good sliding properties. The mechanism is presumed as described below according to a study of the present inventors.

The frictional resistance between the sliding surface 1 and the snow surface varies depending on the surface roughness Ra of the sliding surface 1, and also varies depending on the surface roughness Ra of the snow surface. For example, the snow surface not subjected to sliding has a large surface roughness Ra. With respect to such a snow surface, the smaller the surface roughness Ra of the sliding surface 1, the smaller the frictional resistance between the sliding surface 1 and the snow surface.

On the other hand, the snow surface after the snow skis slide is smoothed by the sliding of the snow skis, and therefore the surface roughness Ra decreases. With respect to such a snow surface, the larger the surface roughness Ra of the sliding surface 1, the smaller the frictional resistance between the sliding surface 1 and the snow surface.

When the entire sliding surface 1 is smooth, there is concern about an increase in the frictional resistance due to the liquid bridge force of water (including water generated by friction) present on the interface between the sliding surface 1 and the snow surface.

However, it is considered in the present invention that the liquid bridge force acting on the sliding surface 1 and the snow surface is reduced due to the high surface roughness of the rear region 1B, and, as a result, an increase in the frictional resistance can be prevented. However, the present invention is not limited to this mechanism.

The snow ski according to this embodiment has a relatively small surface roughness Ra (e.g., Ra of 0.12 um) of the front region 1A of the sliding surface 1, and therefore the frictional resistance between the sliding surface 1 and the snow surface noticeably decreases in sliding on a snow surface having a large surface roughness Ra, and the sliding properties are excellent. The snow surface is smoothed due to the contact with the front region 1A in sliding, so that the surface roughness Ra decreases. The rear region 1B of the sliding surface 1 having a relatively large surface roughness Ra (e.g., Ra of 0.75 um) contacts the snow surface thus smoothed, and therefore the frictional resistance between the sliding surface 1 and the snow surface noticeably decreases in sliding on the smoothed snow surface. Therefore, the snow ski according to this embodiment has excellent sliding properties. Even when a small amount of water is present between the sliding surface 1 and the sliding object (snow surface, ice surface), the same effects as described above are exhibited.

The surface roughness Ra of the front region 1A and the surface roughness Ra of the rear region 1B of the sliding surface 1 are not particularly limited. The surface roughness Ra of the front region 1A is preferably 0.30 um or less, more preferably 0.25 um or less, still more preferably 0.22 um or less, yet still more preferably 0.19 um or less, even yet still more preferably 0.16 um or less, and particularly preferably 0.13 um or less, and may be 0.10 um or less (e.g., 0.09 um or less).

The surface roughness Ra of the rear region 1B is preferably 0.40 um or more, more preferably 0.45 um or more, and still more preferably 0.50 um or more. The surface roughness Ra of the rear region 1B is preferably 5.0 um or less, more preferably 3.0 um or less, still more preferably 2.0 um or less, yet still more preferably 1.5 um or less, and particularly preferably 1.0 um or less.

When the surface roughness Ra of the front region 1A and the surface roughness Ra of the rear region 1B of sliding surface 1 fall within the ranges above, it is considered that the frictional resistance of the entire sliding surface 1 decreases and the sliding properties are improved. The surface roughness Ra of the sliding surface 1 can be measured using a probe or laser tester. The front region 1A and the rear region 1B may entirely have the surface roughness Ra within the ranges above or may partially have the surface roughness Ra within the ranges above.

When the surface roughness Ra is measured using a probe tester, a surface roughness shape tester SURFCOM 1500 DX manufactured by Tokyo Seimitsu Co., Ltd. is used, and a DM43801 is usable as a measuring terminal. The measurement is performed along the sliding direction avoiding recess portions of the structures. The measurement length can be set to 0.3 mm, and the measurement speed can be set to 0.03 mm/sec. It may be also acceptable that the surface roughness Ra is obtained from height information in a state where the least-squares linearity correction is applied to the obtained profile curve, and the average value of the surface roughness Ra measured at a plurality of places is adopted as the surface roughness Ra. In the measurement, a filter (e.g., Gaussian filter) is usable. When the surface roughness Ra is measured using the laser tester, the surface roughness Ra can be measured using a method described in Examples described later, for example.

When the structures are formed in the sliding surface 1, it is preferable that not only the surface roughness Ra of the front region 1A of the sliding surface 1 but the surface roughness Ra of the inner surfaces of the structures (particularly the structures formed in the front region 1A) is small because the sliding properties are further improved.

The structures are shallow grooves for draining water in sliding and extend in a direction parallel to the sliding direction. The cross-sectional shape of the groove (shape of the cross-section when the groove is cut by a plane orthogonal to the sliding direction) is not particularly limited, and is preferably an isosceles trapezoid shape. In the groove having a cross-sectional shape of the isosceles trapezoid shape, a part corresponding to the longer base of the isopod trapezoid shape serves as an opening portion of the groove.

The depth of the groove having the cross-sectional shape of the isosceles trapezoid shape is not particularly limited, and may be set to 30 um or more and 40 um or less. The width of the opening portion of the groove having the cross-sectional shape of the isosceles trapezoid shape (length of the longer base of the isosceles trapezoid) is not particularly limited, and may be set to 100 um or more and 200 um or less. The width of a bottom portion of the groove having the cross-sectional shape of the isosceles trapezoid shape (length of the shorter base of the isopod trapezoid) is not particularly limited, and may be set to 50 um or more 150 um or less. The interval between the grooves adjacent to each other may be set to 0.3 mm or more and 1.0 mm or less.

The front region 1A contains the region first contacting the sliding object in sliding among the plurality of regions (e.g., region positioned on the frontmost side in the sliding direction), but the position in the sliding direction of the region first contacting the sliding object can vary depending on various conditions. For example, the position can vary depending on the type of the sliding object, the state of the sliding object (e.g., snow quality when the sliding object is a snow surface), the mass of an object (or person) on the sliding apparatus (i.e., load applied vertically downward to the sliding apparatus), and the like.

Therefore, the position in the sliding direction of the front region 1A in the sliding surface 1 may be set to the optimally position according to the conditions above (conditions of use of the sliding apparatus). Alternatively, assuming a case where the conditions above vary to some extent, the front region 1A may be set in a wide range such that a sufficient effect is exhibited under any condition within the assumed variation range. When the front region 1A is set in a wide range, the lower limit of the mass of an object (or person) on the sliding apparatus is preferably set to 0 kg.

The sizes (e.g., lengths or areas) of the front region 1A and the rear region 1B in the sliding surface 1 are not particularly limited. For example, the maximum length in the sliding direction of the front region 1A is not particularly limited insofar as the part d-d' first contacting the sliding object in sliding is contained, and is preferably 1 mm or more, more preferably 1 cm or more, still more preferably 5 cm or more, and particularly preferably 8 cm or more. The maximum length in the sliding direction of the front region 1A may be 1/10 or more, 1/5 or more, and 1/4 or more, and can also be set to 1/3 or more (e.g., 1/2 or more) of the maximum length in the sliding direction of the sliding surface 1. The maximum length in the sliding direction of the front region 1A is preferably 2/3 or less or may be set to 1/2 or less of the maximum length in the sliding direction of the sliding surface 1.

The maximum length in the sliding direction of the rear region 1B is preferably 1/4 or more and more preferably 1/3 or more, and can be set to 1/2 or more of the maximum length in the sliding direction of the sliding surface 1. The maximum length in the sliding direction of the rear region 1B is preferably 2/3 or less and more preferably 1/2 or less of the maximum length in the sliding direction of the sliding surface 1.

Herein, the maximum length in the sliding direction of each of the front region 1A and the rear region 1B in the sliding surface 1 is the length in the sliding direction between the frontmost portion and the rearmost portion in the sliding direction in any of the front region 1A and the rear region 1B.

A method for adjusting the surface roughness Ra of the sliding surface 1 is not particularly limited, and is suitably a method for adjusting the surface roughness Ra of the sliding surface 1 by abrasive processing and is particularly suitably a method for polishing the sliding surface 1 using a slurry polishing composition containing abrasives. More specifically, a method for manufacturing a sliding apparatus (e.g., snow ski) according to this embodiment includes a step of applying abrasive processing to the front region 1A, e.g., a polishing step of polishing the front region 1A using a slurry polishing composition containing abrasives.

For example, the sliding surface 1 can be polished by rubbing the sliding surface 1 by moving a polishing pad and the sliding surface 1 relative to each other while the polishing pad is pressed against the sliding surface 1 with a slurry polishing composition interposed between the polishing pad and the sliding surface 1. By selecting the type of the polishing method and the type of the slurry polishing composition used for the polishing as appropriate according to the position in the sliding direction of the region, the surface roughness Ra of the front region 1A and the surface roughness Ra of the rear region 1B each can be adjusted to a desired value.

The sliding surface of a conventional snow ski is subjected to abrasive processing with a polishing instrument (e.g., grinding wheel, file) containing fixed abrasives. Thereafter, to improve the lubricity of the sliding surface, solid wax, such as paraffin wax, is applied, followed by surface treatment, such as scraping or brushing, so that the surface roughness Ra becomes about 0.7 um. Conventionally, a polishing method for further smoothing the sliding surface of the snow ski has not been feasible. However, the polishing method using a slurry polishing composition as described above can set the surface roughness Ra of the sliding surface 1 to 0.30 um or less, for example.

Herein, the slurry polishing composition usable for polishing the sliding surface 1 is described. The slurry polishing composition contains abrasives and a liquid medium, in which the abrasives are dispersed in the liquid medium, forming a slurry. The slurry polishing composition may contain additives as desired.

Examples of the type of the abrasives include, but are not particularly limited to, aluminum oxide, silicon oxide, cerium oxide, zirconium oxide, zircon, titanium oxide, manganese oxide, silicon carbide, boron carbide, titanium carbide, titanium nitride, silicon nitride, titanium boride, tungsten boride, and the like. The abrasives may be used alone or in combination of two or more types thereof.

The average secondary particle diameter of the abrasives is preferably 15 um or less, more preferably 5 um or less, still more preferably 3 um or less, yet still more preferably 1 um or less, even yet still more preferably 0.5 um or less, particularly preferably 0.3 um or less, and most preferably 0.2 um or less, and, for example, may be 0.15 um or less. When the average secondary particle diameter of the abrasives is smaller, there is a tendency that scratches on the sliding surface 1 after the polishing are fewer, the surface roughness Ra is excellent, and the sliding surface is further smoothed. The average secondary particle diameter of the abrasives can be measured by dynamic light scattering, laser diffraction, laser scattering, resistive pulse sensing, or the like, for example.

The concentration of the abrasives in the slurry polishing composition is preferably 45% by mass or less, more preferably 30% by mass or less, and still more preferably 25% by mass or less. When the concentration of the abrasives is lower, the dispersion stability is good and the cost can be reduced. The concentration of the abrasives in the slurry polishing composition is preferably 2% by mass or more, more preferably 7% by mass or more, still more preferably 10% by mass or more, and particularly preferably 12% by mass or more, and, for example, may be 17% by mass or more. When the concentration of the abrasives is higher, the polishing removal rate rises.

The type of the additives is not particularly limited. For example, additives, such as pH adjusters, etching agents, oxidants, water-soluble polymers, corrosion inhibitors, chelating agents, dispersion aids, preservatives, and antifungal agents, may be added to the slurry polishing composition as desired. The additives may be used alone or in combination of two or more types thereof.

The liquid medium is a dispersion medium or a solvent for dispersing or dissolving, respectively, the components, such as abrasives and additives. Examples of the type of the liquid medium include, but are not particularly limited to, water, organic solvents (e.g., fats and oils, alcohols, ethers), and the like. The liquid media may be used alone or as a mixture of two or more types thereof, and preferably contain water.

The polishing composition may have a compound form. The compound polishing composition is substantially similar to the slurry polishing composition, except that the compound polishing composition has a liquid medium concentration lower than that of the slurry polishing composition and has a semi-solid (grease-like) form and similar to the slurry polishing composition in terms of the abrasives, the liquid medium, and the type of the additives to be used, and therefore descriptions thereof are omitted.

Next, the polishing pad usable for polishing the sliding surface 1 is described. Examples of a material of the polishing pad include, but are not particularly limited to, cloth, non-woven fabric, suede, polyurethane foam, polyethylene foam, porous fluororesin, and the like. Both a polishing pad containing abrasives and a polishing pad free of abrasives may be used. Further, the polishing surface of the polishing pad may have grooves where the slurry polishing composition stays. The grooves may be provided for the purpose of facilitating the spreading of the polishing composition to the center of an object to be polished or the purpose of facilitating the elimination of polishing debris. Further, flocked fabrics or woven fabrics formed of fibers, such as wool and nylon, (an example of the flocked fabrics or the woven fabrics include carpets) are also usable as the polishing pad. The sliding surface 1 may be polished using, in place of the polishing pad, a brush containing fibers, such as nylon, a sponge formed of resin, such as urethane resin, phenolic resin, or epoxy resin, or the like. When the surface roughness Ra of the inner surfaces of the structures is adjusted, the polishing may be performed using flocked fabrics, woven fabrics, or the like having a staple length equal to or longer than the groove depth of the structures, for example.

The polishing of the sliding surface 1 may be performed using a polishing device having a function of performing polishing by holding and moving the polishing pad, may be performed by manually moving a hand polisher attached with the polishing pad by a polishing worker, or may be performed by manually moving the polishing pad by a polishing worker grasping the polishing pad. Alternatively, the sliding surface 1 may be polished by fixing the sliding surface 1 and moving a hand polisher attached with the polishing pad by a robot arm or the like.

Thus, when the sliding surface 1 is configured as described above, the frictional resistance between the sliding surface 1 and the snow surface in sliding is noticeably lowered, and therefore the snow ski may be imparted with extremely excellent sliding properties. When the sliding surface 1 having the above-described configuration is coated with a lubricant layer 16, which is a coating of a lubricant (see FIG. 2), the lubricity of the sliding surface 1 is further increased and the frictional resistance between the sliding surface 1 and the snow surface in sliding is further lowered. Therefore, the sliding properties of the snow ski are further improved.

More specifically, the sliding surface 1 of the snow ski according to this embodiment may be coated with the lubricant layer 16 as illustrated in FIG. 2. When the sliding surface 1 is coated with the lubricant layer 16, the lubricant layer 16 may be entirely applied to the sliding surface 1 or may be applied to only the front region 1A.

The coating with the lubricant layer 16 improves the lubricity of the sliding surface 1. The magnitude of the contact angle of pure water in the front region 1A is not particularly limited, and is preferably 90° or more, more preferably 95° or more, and still more preferably 100° or more. The contact angle of pure water in the front region 1A can be measured using a portable contact angle meter PG-X+ (dropping amount of pure water of 1.5 µL) manufactured by MATSUBO Corporation, for example.

When the sliding surface 1 is coated with the lubricant layer 16, after the polishing step of polishing the sliding surface 1 containing the front region 1A using the slurry polishing composition containing abrasives, a coating step may be performed which includes coating the front region 1A of the sliding surface 1 having a surface roughness Ra set to 0.30 um or less, for example, by polishing with the lubricant layer 16.

It is a matter of course that the lubricant layer 16 also preferably has a smooth surface. When the surface of the lubricant layer 16 is formed to be smooth, the surface of the lubricant layer 16 may be polished to have the surface roughness Ra of 0.30 um or less, for example. The thickness of the lubricant layer 16 is not particularly limited. Even when the surface roughness Ra of the front region 1A of the sliding surface 1 after the polishing exceeds 0.30 um, the same effects as described above may be achieved in some cases when the surface roughness Ra of the surface of the lubricant layer 16 applied to the front region 1A is set to 0.30 um or less.

A method for forming the lubricant layer 16 on the sliding surface 1 is not particularly limited, and common methods, such as roll coating, spray spraying, and brushing, can be adopted without problems. The type of a lubricant forming the lubricant layer 16 is not particularly limited, and common lubricants, such as petroleum lubricants (e.g., paraffin liquid wax, paraffin hot wax), mineral lubricants, fluorine coating materials, glass coating materials, and resin coating materials, are usable. The property of the lubricant is also not particularly limited to a solid form, a grease form, a liquid form, or the like.

Among the lubricants above, the petroleum lubricants (e.g., waxes, such as paraffin liquid wax) and the glass coating materials are more preferable, and the paraffin liquid wax and the glass coating materials are particularly preferable. The glass coating materials are glass-containing lubricants. When a coating is formed using the glass coating materials, a glass-containing coating is formed. Examples of the glass coating materials include a glass coating material G Guard NEO manufactured by RINREI CO., LTD. Examples of the paraffin liquid wax include a BASE MISSION LQD series and a MARVEL LQD series of HAYASHIWAX.

In this embodiment, the present invention is described by illustrating the snow ski as one example of the sliding apparatus, but the type of the snow ski is not particularly limited. For example, snow skis for Nordic skiing competitions or snow skis for Alpine skiing competitions may be acceptable. The snow skis for Nordic skiing competitions may be snow skis for jumping competitions or snow skis for distance competitions.

The sliding apparatus according to the present invention is not particularly limited to the snow ski. Examples other than the snow skis of the sliding apparatus for sliding on snow include snowboards, chair skis, sleds, snowmobiles, and the like, for example. The snowmobile contains a sled-like part in place of wheels as a part for steering, and therefore the present invention is applicable to the sled-like part.

Further, the snow quality of the snow surface on which the sliding apparatus according to the present invention slides is not particularly limited, and the sliding apparatus according to the present invention can slide on the snow surface of fresh snow, clumped snow, coarse snow, and artificial snow, for example.

The snow temperature of the snow surface on which the sliding apparatus according to the present invention slides is not particularly limited, and the sliding apparatus according to the present invention can be preferably used on the snow surface having a snow temperature of 0°C or less, for example.

The outside temperature when the sliding apparatus according to the present invention is used is not particularly limited, and can be preferably used under the outside temperature of 3°C or less, for example.

Further, the present invention is applicable to a sliding apparatus for sliding on ice or water without being limited to the sliding apparatus for sliding on snow. More specifically, the sliding object is not limited to the snow surface, and may also be an ice surface or a water surface. Even in the case of the sliding apparatus for sliding on ice or on water, when the configuration of the sliding surface is the same as the configuration in the case of the snow ski according to this embodiment described above, the above-described effects are obtained when the sliding apparatus for sliding on ice or on water slides on ice or on water as in the case of the sliding apparatus for sliding on snow.

Examples of the sliding apparatus for sliding on ice include ice skate boots, sleds, curling stones, and the like. When the sliding apparatus is an ice skate boot, for example, the configuration of the sliding surface of a metal blade contacting the ice surface may be the same as that of the snow ski according to this embodiment described above.

The type of the ice skate boots is not particularly limited, and may be ice skate boots for ice hockey, ice skate boots for speed skating, or ice skate boots for figure skating, for example. The type of the sleds is also not particularly limited, and may be a bobsled sled, a luge sled, or a skeleton sled, for example.

Hereinafter, the present invention is more specifically described with reference to Examples, Comparative Examples, and Reference Examples.

### [Reference Examples]

The surface of a plate-like part manufactured by Mitsubishi Chemical Advanced Materials was polished to have a surface roughness Ra of 0.06 um, giving a test piece of Reference Example 1. The surface of a plate-like part manufactured by Mitsubishi Chemical Advanced Materials was polished to have a surface roughness Ra of 0.4 um, giving a test piece of Reference Example 2.

The surface roughness Ra of the test piece was measured using a laser microscope VK-X200 manufactured by Keyence Corporation. The magnification is 1000 times. The size of a measurement area is 284 µm × 213 um. The surface roughness Ra was determined from height information for 1024 pixels × 768 pixels in the measurement area. In the measurement, a Gaussian filter (λs = 0.25 um, Ac = 0.08 mm) was applied.

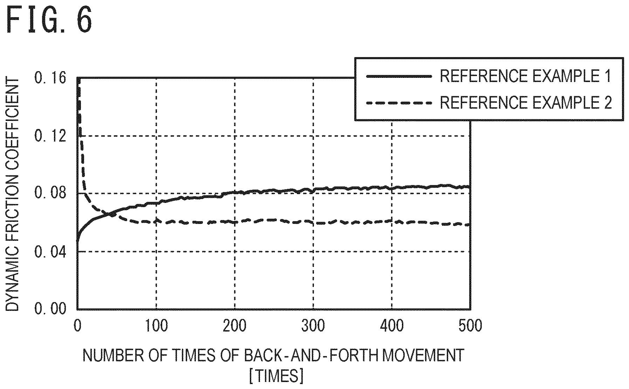

Next, the polishing surface of the test piece above was slid with ice as the mating material, and the dynamic friction coefficient of the test piece was measured. First, the test piece was placed on an ice flat plate. The test piece was placed such that the polishing surface which is the sliding surface was in contact with the flat plate (ice surface). The ice forming the flat plate is produced from pure water. The surface temperature of the flat plate is -0.7°C. Then, the dynamic friction coefficient was measured by sliding the test piece on the flat plate while a pressure of 145 g/cm² is being applied using a static/dynamic friction tester TL201Tt manufactured by Trinity-Lab, Inc. The sliding was performed by moving the test piece back and forth 500 times along a linear path with one way of 70 mm. The sliding speed is 100 mm/s. The results are shown in the graph in FIG. 6.

First, as a result of observing the surface of the ice flat plate before and after the sliding, it was found that the surface of the ice flat plate was smoothed by the sliding.

Next, the graph in FIG. 6 shows that Reference Example 1 has a dynamic friction coefficient smaller than that of Reference Example 2 in the early stage of the sliding, while Reference Example 2 has a dynamic friction coefficient smaller than that of Reference Example 1 when the number of times of the back-and-forth movement exceeds about 50.

It was confirmed from these facts that the polishing surface having a small surface roughness Ra is effective for ice having a relatively coarse surface, while the polishing surface having a relatively large surface roughness Ra is effective for ice having a relatively smooth surface. Further, it was found that the dynamic friction coefficient varies depending on the surface roughness of the ice.

### [Examples 1, 2]

Next, the dynamic friction coefficient was measured using a snow ski. First, a snow ski of Example 1 is described. Stone processing by a structure machine was applied to the entire bottom surface (exposed surface of the sole) of the snow ski to remove the structures formed in the bottom surface of the snow ski. Subsequently, the bottom surface of the snow ski was divided into three regions disposed side by side in order along the sliding direction (longitudinal direction of the snow ski) and having the same area (see FIG. 1). Among the three regions, a region positioned on the frontmost side in the sliding direction was used as the front region, a region positioned on the rearmost side in the sliding direction was used as the rear region, and a region positioned between the front region and the rear region was used as the intermediate region. A region first contacting the snow surface in sliding is contained in the front region.

Then, the front region containing the region first contacting the snow surface in sliding was mirror-polished using a slurry polishing composition and a polishing pad. The surface roughness Ra of the mirror-polished front region was 0.15 um (average value ± 1σ (standard deviation) within the range of 0.10 to 0.20 um) as measured in four arbitrary places.

Although the rear region was not mirror-polished, the surface roughness Ra of the rear region was 0.53 um (average value ± 1σ (standard deviation) within the range of 0.42 to 0.64 um) as similarly measured in four arbitrary places.

Further, the surface of the front region was coated with a lubricant layer by applying a glass coating material G Guard NEO manufactured by RINREI CO., LTD, followed by drying. The surface roughness of the front region coated with the lubricant layer was 0.12 um (average value ± 1σ (standard deviation) of 0.09 to 1.5 um) as measured in four arbitrary places.

Next, the surface of the rear region and the surface of the intermediate region each were coated with a coating of a lubricant by applying a ski wax manufactured by Gallium CO., Ltd. Then, an excess lubricant was removed using a scraper and a brush, so that the surface roughness Ra of the rear region and the surface roughness Ra of the intermediate region were 0.76 um (average value ± 1σ (standard deviation) was 0.53 to 1.00 um) as measured in four arbitrary places.

The length of the snow ski is 1.6 m. The sole is formed of polyethylene. The exposed surface of the sole was not formed with the structures (shallow grooves for draining water in sliding) or no scales. The slurry polishing composition used for polishing the sole contains 20% by mass of silica having an average secondary particle diameter of 100 nm and 80% by mass of pure water (pH = 10). The material of the polishing pad used for polishing the sole is suede.

The surface roughness Ra of the bottom surface of the snow ski was measured using a laser microscope VK-X200 manufactured by Keyence Corporation as in the case of the test pieces above. The magnification is 1000 times. The size of a measurement area is 284 µm × 213 um. In the measurement area, 48 straight lines along the sliding direction were drawn, and the line roughness analysis (multiple line analysis) was performed. Then, the surface roughness Ra was determined from height information for 1024 pixels in each straight line, and the average value of the surface roughness Ra of the 48 straight lines was adopted as the surface roughness Ra of the bottom surface of the snow ski. In the measurement, a Gaussian filter was not used.

The lubricity of the front region and the rear region was evaluated based on the contact angle of pure water indicating water repellency. The contact angle of pure water was measured using a portable contact angle meter PG-X+ (dropping amount of pure water of 1.5 µL) manufactured by Matsubo Co. As a result, the contact angle of the front region was 95.5° and the contact angle of the rear region was 115.5°.

Next, a snow ski of Example 2 is described. The snow ski of Example 2 is similar to the snow ski of Example 1, except that the structures were formed in the exposed surface of the sole.

To make the surface condition of the bottom surface of the snow ski uniform with that of Example 1, stone processing by a structure machine was applied to the entire bottom surface of the snow ski to remove the structures formed in the bottom surface of the snow ski, and then stone processing was performed to form the structures.

For the measurement of the surface roughness Ra in the snow ski formed with the structures, the measurement was performed in a place not containing parts of the structures.

The surface roughness Ra of the mirror-polished front region was 0.13 um (average value ± 1σ (standard deviation) within the range of 0.10 to 0.16 um) as measured in four arbitrary places. Although the rear region was not mirror-polished, the surface roughness Ra of the rear region was 0.65 um (average value ± 1σ (standard deviation) within the range of 0.53 to 0.77 um) as similarly measured in four arbitrary places.

### [Comparative Examples 1, 2]

Next, snow skis of Comparative Example 1 and Comparative Example 2 are described. The snow ski of Comparative Example 1 was similarly subjected to the stone processing applied to the snow ski of Example 1, so that the surface condition of the entire bottom surface of the snow ski is the same as the surface condition of the rear region of the snow ski of Example 1. The snow ski of Comparative Example 2 is similar to the snow ski of Comparative Example 1, except that the structures are formed in the exposed surface of the sole.

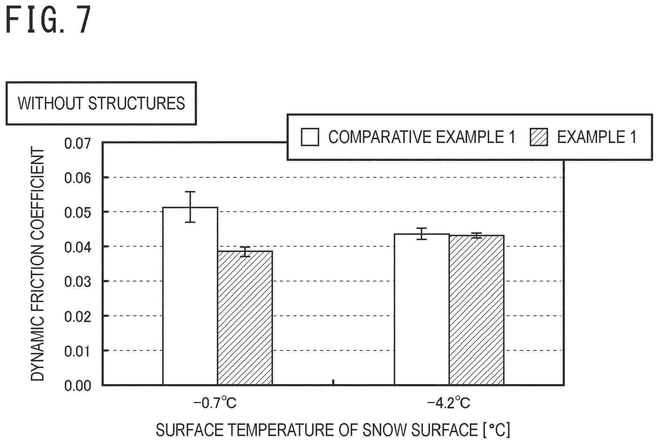

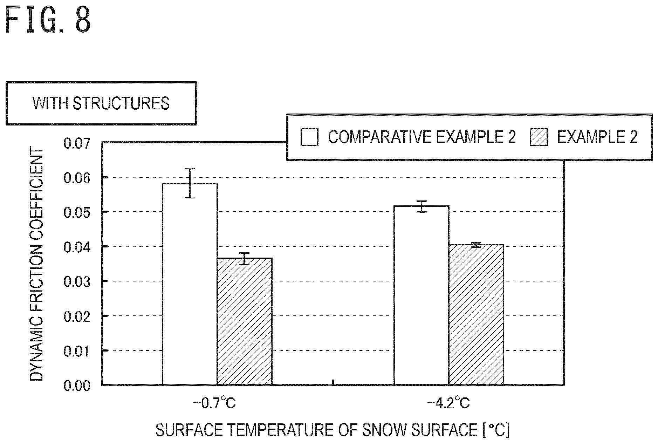

The snow skis thus manufactured of Examples 1, 2 and Comparative Examples 1, 2 were measured for the dynamic friction coefficient in sliding on a snow surface. The measurement method is as described below. The snow ski was placed on a snow surface such that the bottom surface which is the sliding surface was in contact with the snow surface, and a 55 kg weight was placed on the upper surface of the snow ski. Then, the snow ski was towed with a rope with the front region facing forward and the snow ski was linearly slid by 7 m on the snow surface, thereby measuring the dynamic friction coefficient. The sliding speed is 300 mm/s. The surface temperature of the snow surface is -0.7°C or -4.2°C. The dynamic friction coefficient was calculated from the tensile force applied to the rope in sliding. The results are shown in Table 1 and the graphs in FIGS. 7, 8.

Table 1 and the graphs in FIGS. 7, 8 showed that the dynamic friction coefficients of the snow skis of Examples were equal to or lower than that of the snow skis of Comparative Examples, irrespective of the presence or absence of the structures, and the sliding properties were equal or higher than those of the snow skis of Comparative Examples. Further, the snow skis of Examples had lower dynamic friction coefficients when the surface temperature of the snow surface was higher. As a result, when the surface temperature of the snow surface was higher, a difference in the dynamic friction coefficient from the snow skis of Comparative Examples was larger, and, when the surface temperature of the snow surface was higher, the sliding properties of the snow skis of Examples were more excellent than those of the snow skis of Comparative Examples. It was found that, particularly when the surface temperature of the snow surface was -0.7°C or more, the dynamic friction coefficient was lower.

**[Table 1]**

| | Structure | Lubricant of front region | Dynamic friction coefficient | |
|---|---|---|---|---|
| | | | Snow surface -0.7°C | Snow surface -4.2°C |
| Comp. Ex. 1 | Absent | Ski wax | 0.051 | 0.044 |
| Ex. 1 | Absent | Glass coating material | 0.038 | 0.043 |
| Comp. Ex. 2 | Present | Ski wax | 0.058 | 0.052 |
| Ex. 2 | Present | Glass coating material | 0.036 | 0.041 |

### [Example 3]

Example 3 was manufactured in the same manner as in Example 2, except that the area of the front region in the bottom surface of the snow ski was 30.3% and that the entire bottom surface of the snow ski was coated with a lubricant layer using a paraffin liquid wax (MARVEL LQD-02 manufactured HAYASHIWAX.) and an excess lubricant was removed using a brush.

The surface roughness Ra of the front region coated with the lubricant layer was 0.195 um (average value ± 1σ (standard deviation) of 0.164 to 0.226 um) as measured in four arbitrary places. The surface roughness Ra of the rear region and the surface roughness Ra of the intermediate region were 0.521 µm (average value ± 1σ (standard deviation) of 0.461 to 0.581 um) as measured in four arbitrary places.

### [Example 4]

Example 4 was manufactured in the same manner as in Example 2, except that the area of the front region in the bottom surface of the snow ski was 12.1% and that the entire bottom surface of the snow ski was coated with a lubricant layer using a paraffin liquid wax (MARVEL LQD-02 manufactured HAYASHIWAX.) and an excess lubricant was removed using a brush.

The surface roughness Ra of the front region coated with the lubricant layer was 0.195 um (average value ± 1σ (standard deviation) of 0.164 to 0.226 um) as measured in four arbitrary places. The surface roughness Ra of the rear region and the surface roughness Ra of the intermediate region were 0.521 um (average value ± 1σ (standard deviation) of 0.461 to 0.581 um) as measured in four arbitrary places.

### [Example 5]

Example 5 was manufactured in the same manner as in Example 2, except that the area of the front region in the bottom surface of the snow ski was 30.3% and that a lubricant used in applying a lubricant layer to the rear region and the intermediate region was a paraffin liquid wax (MARVEL LQD-02 manufactured HAYASHIWAX.) and an excess lubricant was removed using a brush.

The surface roughness Ra of the front region coated with the lubricant layer was 0.144 um (average value ± 1σ (standard deviation) of 0.109 to 0.179 µm) as measured in four arbitrary places. The surface roughness Ra of the rear region and the surface roughness Ra of the intermediate region were 0.521 um (average value ± 1σ (standard deviation) of 0.461 to 0.581 um) as measured in four arbitrary places.

### [Comparative Example 3]

Comparative Example 3 was manufactured in the same manner as in Comparative Example 2, except that the entire bottom surface was coated with a lubricant layer using a paraffin liquid wax (MARVEL LQD-02 manufactured HAYASHIWAX.) in place of the ski wax manufactured by Gallium CO., Ltd., and an excess lubricant was removed using a brush.

The snow skis thus manufactured of Examples 3, 4, 5 and Comparative Example 3 were measured for the dynamic friction coefficient in sliding on a snow surface. A measurement method is the same as that of Examples 1, 2 and Comparative Examples 1, 2. With respect to the measurement conditions, the dynamic friction coefficients were also measured for not only the same conditions as those in the case of Examples 1, 2 and Comparative Examples 1, 2 but the conditions of the snow surface temperature of -0.7°C and the sliding speed of 900 mm/s. The results are shown in Table 2.

As is understood from Table 2, Examples 3, 4, 5 had the lower dynamic friction coefficients and more excellent sliding properties than those of the snow ski of Comparative Example 3. Further, a comparison between Example 3 and Example 5 suggests that the sliding properties when the paraffin liquid wax was used as the lubricant of the front region are more excellent than those when the glass coating material was used.

**[Table 2]**

| | Area of front region | Structure | Lubricant of front region | Dynamic friction coefficient | | |
|---|---|---|---|---|---|---|
| | | | | Sliding speed 300 mm/s | | Sliding speed 900 mm/s |
| | | | | Snow surface -0.7°C | Snow surface -4.2°C | Snow surface -0.7°C |
| Comp. Ex. 3 | 0% | Present | Paraffin liquid wax | 0.051 | 0.044 | 0.038 |
| Ex. 3 | 30.3% | Present | Paraffin liquid wax | 0.034 | 0.038 | 0.025 |
| Ex. 4 | 12.1% | Present | Paraffin liquid wax | 0.045 | 0.041 | 0.030 |
| Ex. 5 | 30.3% | Present | Glass coating material | 0.038 | 0.041 | 0.028 |

### Reference Signs List

- 1: sliding surface
- 1A: front region
- 1B: rear region
- 1C: intermediate region
- 1D: front region in sliding direction with respect to part first contacting sliding object in sliding region
- d-d': part first contacting sliding object in sliding region
- 12: sole
- 16: lubricant layer

## Claims

1. A sliding apparatus for sliding on a sliding object,
the sliding object being a snow surface or an ice surface,
the sliding apparatus comprising:
a sliding surface contacting the sliding object,
the sliding surface being divided into a plurality of regions different in a surface arithmetic mean roughness Ra, and the plurality of regions being arranged in order along a longitudinal direction, wherein
a surface arithmetic mean roughness Ra of a front region which is a region first contacting the sliding object in sliding among the plurality of regions is smaller than a surface arithmetic mean roughness Ra of a rear region positioned rearward with respect to the front region.

2. The sliding apparatus according to claim 1, wherein the surface arithmetic mean roughness Ra of the front region is 0.30 um or less and the surface arithmetic mean roughness Ra of the rear region is 0.40 um or more.

3. The sliding apparatus according to claim 1 or 2, wherein the front region having the surface arithmetic mean roughness Ra smaller than the surface arithmetic mean roughness Ra of the rear region has a maximum length in the longitudinal direction of 1 mm or more.

4. The sliding apparatus according to any one of claims 1 to 3, wherein the front region is coated with a coating of a paraffin liquid wax or a glass coating material.

5. A sliding method for performing sliding on the sliding object using the sliding apparatus according to any one of claims 1 to 4.

6. A method for manufacturing the sliding apparatus according to any one of claims 1 to 3, comprising:
polishing the front region using a slurry polishing composition containing abrasives.

7. A method for manufacturing the sliding apparatus according to claim 4, comprising:
polishing the front region using a slurry polishing composition containing abrasives; and
after the polishing, coating the front region with a coating of a paraffin liquid wax or a glass coating material.
